# EUROPÄISCHE PATENTSCHRIFT

(11) **EP 0 457 999 B1**
(45) Veröffentlichungstag und Bekanntmachung des Hinweises auf die Patenterteilung: **28.09.1994**
(21) Anmeldenummer: 90810953.1
(22) Anmeldetag: 06.12.1990
(51) Int. Cl.: G01F 1/66

(54) **Messerwertaufnehmer für ein Ultraschall-Volumendurchfluss-Messgerät**
Sensor unit of an ultrasonic volume flowmeter
Module de capteurs à mesure ultrasonique pour un débimètre volumétrique

(30) Priorität: 19.05.1990 EP 90109542
(43) Veröffentlichungstag der Anmeldung: 27.11.1991
(73) Patentinhaber: Endress + Hauser Flowtec AG, CH-4153 Reinach BL 1 (CH)
(72) Erfinder: Lang, Michael, W-7858 Weil-Haltingen (DE); Steinacher, Michael, CH-4054 Basel (CH); Wüst, Urs, CH-4143 Dornach (CH)
(74) Vertreter: Morstadt, Volker, Dipl.-Ing.

(56) Entgegenhaltungen:
- EP-A- 0 036 658
- WO-A-90/00723
- GB-A- 2 142 431
- PATENT ABSTRACTS OF JAPAN vol. 10, no. 324 (P-512)(2380) 5. November 1986 ; & JP-A-61 132 823

## Beschreibung

Die Erfindung besteht nach dem Wortlaut des Anspruchs 1 in einem Meßwertaufnehmer für ein Ultraschall-Volumendurchfluß-Meßgerät, der in eine die zu messende Flüssigkeit führende Rohrleitung einzusetzen ist und der aus einem geraden Meßrohr mit freier Strömungsquerschnittsfläche und ununterbrochener Rohrwand besteht, auf dessen Umfangsfläche, in Strömungsrichtung aufeinanderfolgend voneinander beabstandet, formschlüssig befestigt sind: Ein einlaßseitiger, erster Resonanzabsorber, bestehend aus mindestens einer Absorberscheibe; eine erste Wandlerscheibe, auf deren einer Seitenfläche mindestens ein ihre Radialresonanzfrequenz erregender, erster Ultraschallwandler befestigt ist; eine zweite Wandlerscheibe, auf deren einer Seitenfläche mindestens ein ihre Radialresonanzfrequenz erregender, zweiter Ultraschallwandler befestigt ist; ein auslaßseitiger, zweiter Resonanzabsorber, bestehend aus mindestens einer Absorberscheibe, wobei die Absorberscheiben so dimensioniert sind, daß ihre jeweilige Radialresonanzfrequenz gleich der Ultraschallwandler-Erregerfrequenz ist.

Die Erfindung ermöglicht es, dem Ultraschall-Durchflussmeß-Prinzip anhaftende Nachteile durch die im folgenden angegebenen Eigenschaften und Vorteile zu überwinden. Der Meßwertaufnehmer kann auch für kleinste Nennweiten des Meßrohres dimensioniert werden, so daß kleine und kleinste Volumendurchflüsse meßbar sind.

Der Meßwertaufnehmer ist ferner für alle Arten von Flüssigkeiten geeignet, und zwar unabhängig davon, was für eine Art von Strömungstyp sich darin ausbildet. Es können sowohl laminare als auch turbulente Strömungen gemessen werden. Aber auch solche an der Grenze von laminar zu turbulent sind ohne weiteres meßbar, oder solche mit stark veränderlicher Reynoldszahl.

Auch kann das Material des Meßwertaufnehmers an die zu messende Flüssigkeit im Hinblick auf ihre Aggressivität angepaßt werden. Auch ist er ohne weiteres lebensmitteltauglich. Dies wird auch noch dadurch unterstützt, daß das Meßrohr aufgrund seiner ununterbrochenen Innenwand leicht gereinigt werden kann und sich daran kein Material ablagert. Bei metallischem oder keramischem Messrohr können auch Hochdruck-Flüssigkeiten gemessen werden.

Da die Ultraschallwandler auf mindestens einer Seitenfläche der Wandlerscheiben befestigt sind, sind sie ohne Ausbau des Meßwertaufnehmers aus der Rohrleitung auswechselbar, d.h. daß z.B. ein Verfahrensablauf, innerhalb dessen die Volumendurchflußmessung erfolgt, nicht unterbrochen zu werden braucht.

Als elektronische Meß- und Betriebsschaltung eignet sich insb. diejenige, die in der eigenen WO-A 90/00723 ausführlich beschrieben ist. Danach sind die Ultraschallwandler abwechselnd als Ultraschallsender oder -empfänger betrieben, um die Laufzeit der Ultraschallwellen sowohl in Strömungsrichtung als auch in Gegenströmungsrichtung messen zu können.

Durch die erfindungsgemäße Ausbildung des Meßwertaufnehmers ist es auch möglich, den Abstand zwischen den Wandlerscheiben so einzustellen, daß die im Betrieb auftretenden Laufzeitdifferenzen von der angeschlossenen Meß- und Betriebschaltung verarbeitet werden können.

Bei den Ultraschallwandlern handelt es sich um solche aus einem geeigneten piezoelektrischen Material, z.B. aus Piezokeramik. Der Sendewandler wird durch Anlegen einer Wechselspannung geeigneter Frequenz in mechanische Resonanz versetzt, was optimal erreicht wird, wenn die elektrische Frequenz mit einer der mechanischen Resonanzfrequenzen übereinstimmt, so daß ein Ultraschallsignal dieser (akustischen) Frequenz vom Wandler, wenn er frei schwingt, abgegeben wird.

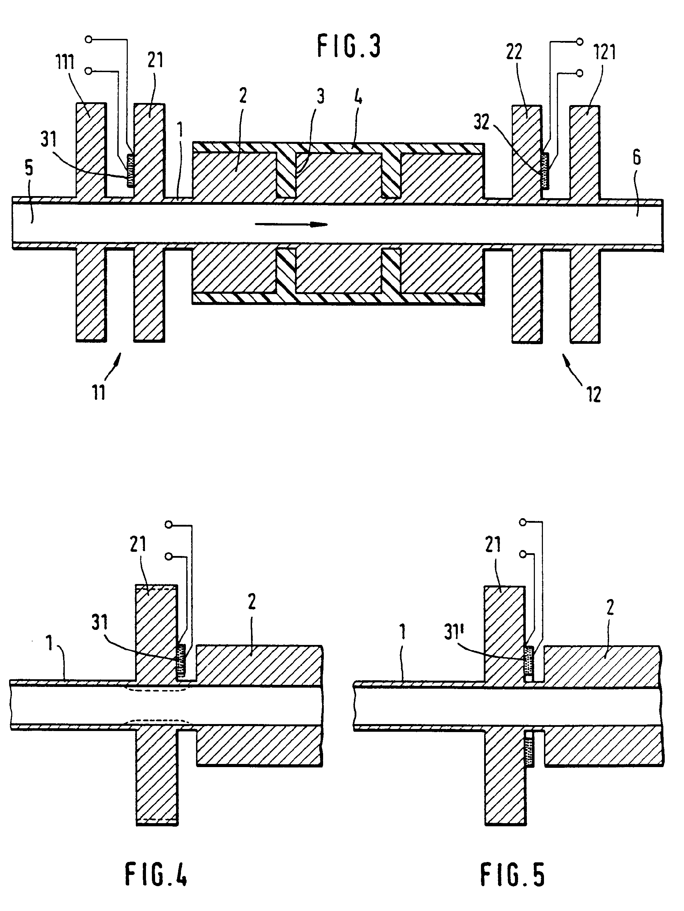

Da bei der Erfindung der jeweilige Ultraschallwandler auf seiner zugehörigen Wandlerscheibe befestigt ist, erregt er diese entsprechend. Dies geschieht wieder optimal, wenn eine ihrer mechanischen Resonanzfrequenzen erregt wird, d.h. wenn diese mit der akustischen Frequenz des Wandlers übereinstimmt. Bei der Erfindung ist die mechanische Resonanzfrequenz der jeweiligen Wandlerscheibe eine ihrer Radialresonanzfrequenzen, beispielsweise diejenige vom Mode null. Die Wandlerscheiben schwingen also in radialer Richtung, so daß an der Stelle, an der sie am Meßrohr befestigt sind, diese Schwingung auf die Rohrwand und von dort auf die Flüssigkeit übertragen wird (vgl. auch Fig. 4).

Der Empfangsultraschallwandler wird durch die auf ihn von der Wandlerscheibe ausgeübte mechanische Schwingung zur Abgabe einer damit gleichfrequenten Wechselspannung erregt. Die mechanische Schwingung der Wandlerscheibe mit deren Radialresonanzfrequenz wird ihrerseits über die Meßrohrwand von der in der Flüssigkeit laufenden Ultraschallwelle bewirkt.

Der Meßwertaufnehmer kann in Ausgestaltung der Erfindung vollständig aus Metall bestehen, z.B. vollständig aus einer für den beabsichtigten Verwendungszweck geeigneten rostfreien Stahllegierung. Es ist jedoch nach einer anderen Ausgestaltung auch möglich, für das Meßrohr, für die Wandler- und/oder die Absorberscheiben unterschiedliche Metalle vorzusehen. Dies ist insb. dann vorteilhaft, wenn in weiterer Ausgestaltung einerseits die Wandler- und die Absorberscheiben aus demselben Metall mit möglichst niedrigem thermoelastischem Koeffizienten bestehen und das Meßrohr korrosionsbeständig ist oder wenn andererseits die mechanische Resonanzgüte der Wandlerscheiben groß im Vergleich zu der der Absorberscheiben gemacht werden soll.

Nach einer Weiterbildung der Erfindung ist das Meßrohr auf einem Teil seiner Länge zwischen den Wandlerscheiben mit verdickter Wand versehen. Dadurch lassen in der Rohrwand sich, ausgehend von einer der Wandlerscheiben, ausbreitende Schallsignale, die die Meßgenauigkeit ungünstig beeinflussen, so weit dämpfen, daß sie nicht zur anderen Wandlerscheibe gelangen.

In weiterer Ausgestaltung kann die verdickte Wand auch mit mindestens einer Ringnut versehen werden, die bevorzugt mit Dämpfungsmaterial gefüllt wird, das gegebenenfalls auch die Mantelfläche der Wand bedeckt. Durch jede dieser beiden Maßnahmen läßt sich somit ein mechanisches Longitudinalwellen-Filter realisieren.

In vergleichbarer Weise kann auch jeder Resonanzabsorber, insb. wenn er mehr als eine Absorberscheibe aufweist, mit einem Dämpfungsmaterial versehen werden, das die Zwischenräume zwischen den Absorberscheiben ausfüllt. Hierbei können auch die Mantelflächen bedeckt sein.

Nach einer anderen Weiterbildung der Erfindung kann der Meßwertaufnehmer mit jeweils einer Entkoppelscheibe zwischen der jeweiligen Wandlerscheibe und der benachbarten Absorberscheibe versehen sein, wobei die Abmessungen und/oder die mechanischen Eigenschaften der Entkoppelscheibe von denen der Absorberscheibe abweichen.

Bei einer anderen Weiterbildung der Erfindung hat der Meßwertaufnehmer auf den Wandlerscheiben jeweils einen Ultraschallsensor, der als Istwertgeber in eine elektronische Phasenregelschleife zur auf die Resonanzfrequenz der Wandlerscheiben geregelten Erzeugung eines Erregersignals für die Ultraschallwandler einbezogen ist.

Die Erfindung wird nun anhand eines in den Figuren der Zeichnung dargestellten Ausführungsbeispiels erläutert, die schematisch im Querschnitt den Aufbau des Meßwertaufnehmers und den Aufbau von einigen seiner Teile sowie eine Betriebsschaltung zeigen.
- Fig. 1: zeigt einen Meßwertaufnehmer mit gleichbleibender Wandstärke des Meßrohrs,
- Fig. 2: zeigt einen Meßwerfaufnehmer mit verdickter Wand zwischen den Wandlerscheiben,
- Fig. 3: zeigt einen Meßwertaufnehmer mit von einem Dämpfungsmaterial ausgefüllten Ringnuten in der verdickten Wand,
- Fig. 4: zeigt eine Wandlerscheibe mit einem scheibenförmigen Ultraschallwandler,
- Fig. 5: zeigt eine Wandlerscheibe mit einem ringförmigen Ultraschallwandler,
- Fig. 6: zeigt einen Resonanzabsorber mit drei Absorberscheiben,
- Fig. 7: zeigt den Resonanzabsorber nach Fig.6 mit aufgebrachtem Dämpfungsmaterial.
- Fig. 8: zeigt einen Meßwertaufnehmer mit Entkopplungsscheiben, und
- Fig. 9: zeigt schematisch das Blockschaltbild einer Phasenregelschleife zur Erzeugung eines Erregersignals für die Ultraschallwandler.

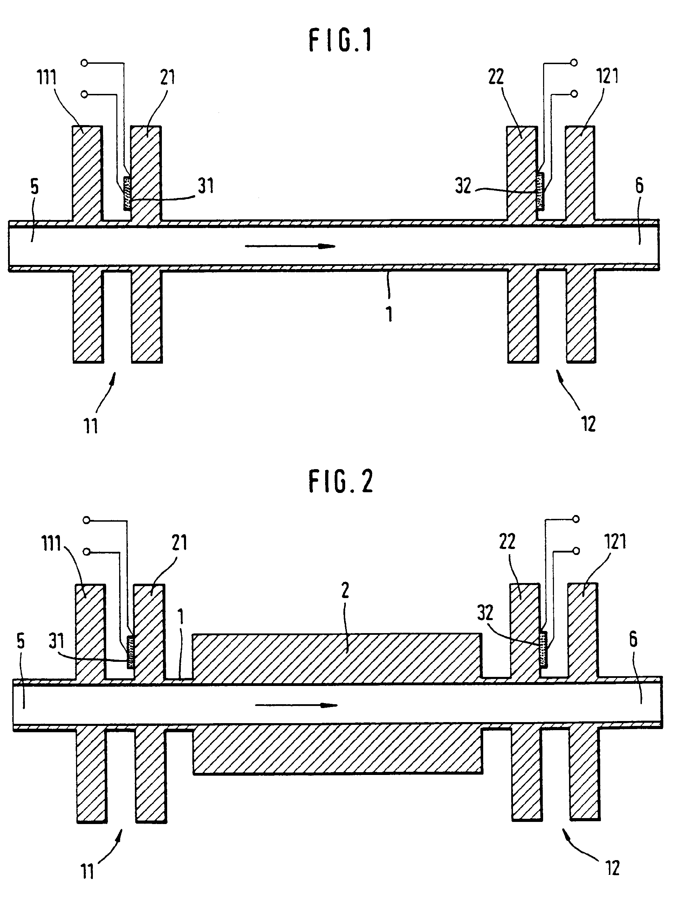

Die Schnittzeichnung der Fig.1 zeigt als Ausführungsbeispiel einen Meßwertaufnehmer. Er besteht aus einem Meßrohr 1, das aus einem geeigneten Material, vorzugsweise aus einem Metall, wie z.B. rostfreier Stahl, besteht. Auch Keramik- oder Glaswerkstoffe sind geeignet. Die Materialwahl hängt vom konkreten Anwendungsfall und dessen Parametern ab, wie z.B. von der Art und den Eigenschaften der zu messenden Flüssigkeit, vom Druckbereich, vom Temperaturbereich, von den Umgebungsbedingungen etc.

In Fig. 1 hat das Meßrohr 1, dessen Einlaß 5 links und dessen Auslaß 6 rechts liegt, so daß die Strömungsrichtung dem Pfeil entspricht, eine freie Strömungsquerschnittsfläche und eine ununterbrochene Rohrwand auf seiner gesamten Länge. Auf seiner Umfangsfläche ist ein einlaßeitiger, erster Resonanzabsorber 11 aus einer Absorberscheibe 111 befestigt. Auf sie folgt in Strömungsrichtung mit einem gewissen Abstand eine erste Wandlerscheibe 21, auf der ein erster Ultraschallwandler 31 seitlich befestigt ist.

Auf der Auslaßeite liegt der Wandlerscheibe 21 eine zweite Wandlerscheibe 22 gegenüber, auf der ein zweiter Ultraschallwandler 32 seitlich befestigt ist. Ihr folgt in Strömungsrichtung wiederum mit Abstand, vorzugsweise mit demselben Abstand wie zwischen Absorberscheibe 111 und Wandlerscheibe 21, ein zweiter Resonanzabsorber 12 aus einer Absorberscheibe 121.

Die Ultraschallwandler 31, 32 können auch auf den einander zugewandten Seitenflächen der Wandlerscheiben angebracht sein, was insb. bei gedrängter Bauweise von Vorteil ist. Ferner kann es zweckmäßig sein, z.B. aus Symmetriegründen, mehrere Ultraschallwandler, z.B. vier, auf einer Wandlerscheibe vorzusehen, wie dies in Fig. 9 zu sehen ist.

Der Meßwertaufnehmer ist mit seiner Einlaß- und mit seiner Auslaßeite in eine nichtgezeichnete Rohrleitung eingesetzt, z.B. durch entsprechende Verbindungsmittel, etwa Flansche, in der die zu messende Flüssigkeit fließt.

Die beiden Resonanzabsorber 11, 12 verhindern, daß einerseits Schallenergie in die angeschlossene Rohrleitung gelangt und daß andererseits, sollte dies doch noch der Fall sein, darin entstehende Reflexionsenergie auf ihrem "Rückweg" absorbiert wird und somit nicht zur Wandlerscheibe 21, 22 gelangen kann.

Auch allfällig aus der Rohrleitung kommende (Stör)energie entsprechender Frequenz, z.B. in Form von Geräuschen, wird selbstverständlich absorbiert.

Die Absorptionseigenschaften beruhen zunächst darauf, daß die Absorberscheiben eine mechanische Resonanz bei der Ultraschallfrequenz haben und daher beim Angeregtwerden Schallenergie aufnehmen. Je nach der mechanischen Resonanzgüte der Absorberscheiben entziehen Sie dem Ultraschallfeld auch im eingeschwungenen Zustand Energie. Dieser Energieentzug ist von der Resonanzgüte abhängig, die durch entsprechende Materialwahl beeinflußt werden kann.

In Fig. 2 ist die Anwendung einer vorteilhaften Maßnahme gezeigt, mit der verhinderbar ist, daß sich in der Wand des Meßrohrs 1 zwischen den beiden Wandlerscheiben 21, 22 eine Longitudinalwelle ausbreitet, die, von der einen Wandlerscheibe ausgehend, die andere erreicht und somit einen Meßfehler erzeugen könnte. Zu dessen Vermeidung ist das Meßrohr auf einem Teil seiner Länge mit einer verdickten Wand 2 versehen. Im übrigen ist der Aufbau des Meßwertaufnehmers gleich wie in Fig. 1.

In Fig. 3 ist die Anwendung einer vorteilhaften Maßnahme bei der Ausgestaltung nach Fig. 2 gezeigt, mit der eine Verbesserung von deren Dämpfungsverhalten erreicht wird. Hierzu sind Ringnuten 3 vorgesehen, die in der verdickten Wand 2 angebracht sind. Zweckmäßigerweise liegt deren Boden jeweils in einer solchen Tiefe, daß die dortige Wandstärke gleich der des Meßrohrs im Ein- und Auslaßbereich ist.

In Fig. 3 ist ferner gezeigt, daß die Ringnuten 3 in weiterer Ausgestaltung mit einem Dämpfungsmaterial 4, z.B. einem Kunststoff, gefüllt werden können, der hier auch die Mantelfläche der verdickten Wand 2 bedeckt, was jedoch nicht zwingend ist. Dadurch sind die Dämpfungseigenschaften noch weiter verbesserbar.

Durch die beiden Varianten nach Fig. 3 kann ein mechanisches Longitudinalwellen-Filter realisiert werden, das auch bei nahe beieinander liegenden Wandlerscheiben verhindert, daß Longitudinalwellen in der Meßrohrwand vom einen zum anderen Ultraschallwandler gelangen.

In Fig. 4 ist schematisch gezeigt, wie eine Wandlerscheibe radial schwingt, vgl. die gestrichelten Linien. Der Ultraschallwandler 31 ist eine entsprechend dimensionierte Scheibe.

Fig. 5 zeigt, daß auch ein ringförmiger Ultraschallwandler 31′ eingesetzt werden kann.

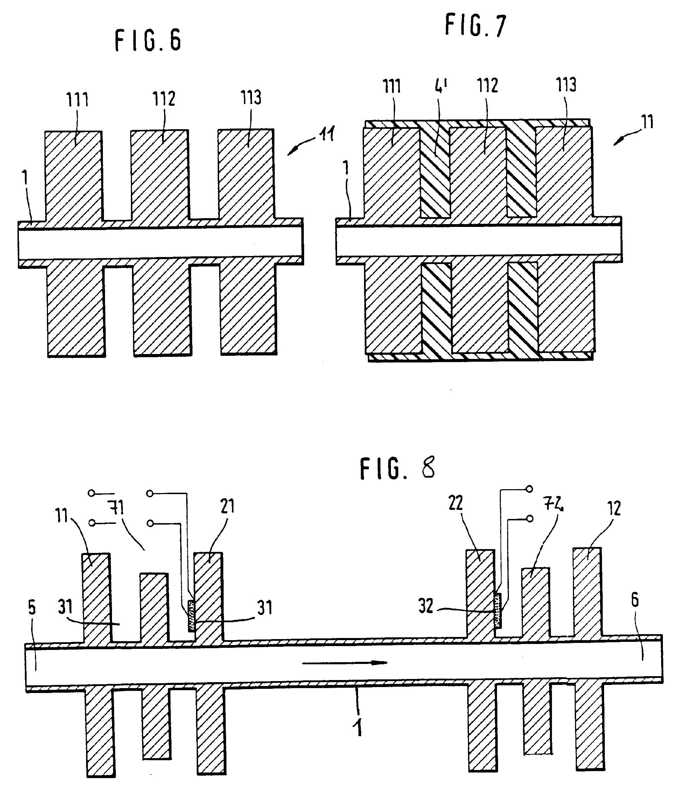

Fig. 6 zeigt einen Resonanzabsorber mit drei Absorberscheiben 111, 112, 113, die jeweils dieselbe Radialresonanzfrequenz haben.

In Fig. 7 ist gezeigt, daß die Zwischenräume zwischen den drei Absorberscheiben 111, 112, 113 von Fig. 6 mit einem Dämpfungsmaterial 4′ ausgefüllt sein können, das gegebenenfalls auch deren Mantelflächen bedecken kann. Damit lassen sich die gleichen Wirkungen erzielen wie mit dem Dämpfungsmaterial 4 bei der Anordnung nach Fig. 3.

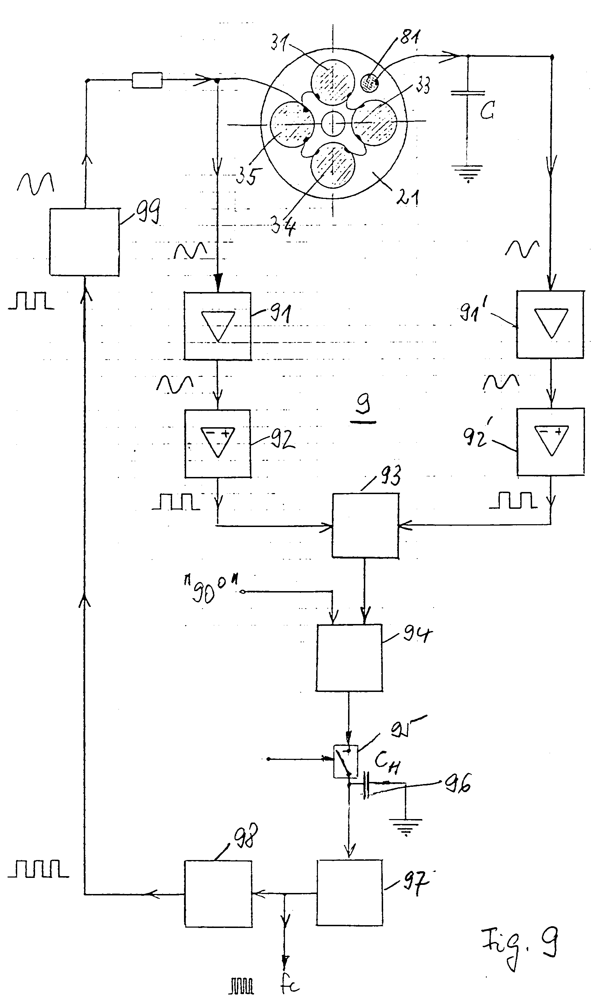

In Fig. 8 ist schematisch eine andere Weiterbildung der Erfindung gezeigt. Zwischen jeder Wandlerscheibe 21, 22 und der benachbarten Absorberscheibe 11, 12 ist eine Entkoppelscheibe 71, 72 eingefügt. Diese dient dazu, eine allfällig störende, über das die Wandlerscheibe mit der Absorberscheibe verbindende Rohrstück erfolgende Überkopplung von Schallenergie auf die Absorberscheibe zu unterdrücken. Dabei weichen die Abmessungen und/oder die mechanischen Eigenschaften der Entkoppelscheibe von denen der Absorberscheibe ab.

Bei allen Ausgestaltungen nach den Fig. 1 bis 8 können die Absorber- und Wandlerscheiben vorgefertigte Teile sein, die, z.B. mittels einer Preßpassung, auf dem Meßrohr 1 befestigt werden. Bei dieser Aufbauart können dann, wie erwähnt, unterschiedliche Materialien für Meßrohr und Scheiben vorgesehen werden. Wenn der Meßwertaufnehmer jedoch aus ein und demselben Material bestehen kann, ist es andererseits auch möglich, ihn einstückig herzustellen, z.B. durch Feingießen oder Drehen etc.

Das in Fig. 9 schließlich gezeigte Blockschaltbild soll veranschaulichen, wie ein Erregersignal für die Ultraschallwandler so erzeugt werden kann, daß der jeweilige Sendewandler die zugehörige Wandlerscheibe immer mit deren Resonanzfrequenz erregt. Dies geschieht mittels einer Phasenregelschleife 9. Die Wandlerscheibe 21 ist in Seitenansicht wiedergegeben, so daß die - hier vier - parallelgeschalteten Ultraschallwandler 31, 33, 34, 35, sowie ein Ultraschallsensor 81 im Grundriß zu sehen sind.

Das Erregersignal in Form einer (hochfrequenten) sinusförmigen Spannung ist nicht nur den Wandlern 31, 33, 34, 35, sondern auch einem Spannungsverstärker 91 eingangsseitig zugeführt. In vergleichbarer Weise liegt der Ultraschallsensor 81, dem ein Kondensator C zum Schaltungsnullpunkt hin parallelgeschaltet ist, am Eingang eines Spannungsverstärkers 91′. Mit dem Kondensator C wird eine ausreichende große Zeitkonstante des Sensors 81 zusammen mit dem Eingangswiderstand des Spannungsverstärkers 91′ erreicht. Der jeweilige Ausgang der beiden Spannungsverstärker 91, 91′ führt zum jeweiligen Eingang eines Rechteckwellenwandlers 92, 92′. Diese können z.B. als eingangsseitig übersteuerte Verstärker realisiert sein.

Der jeweilige Ausgang der beiden Rechteckwellenwandler 92, 92′ liegt an je einem Eingang eines Phasenkomparators 93 mit Tiefpaßfilter, an dem eine der Phasenverschiebung zwischen dem Erregersignal und dem Signal des Ultraschallsensors 81 proportionale Spannung entsteht. Diese ist zusammen mit einem Signal "90°" für eine Phasenverschiebung von 90° einem Regler 94 zugeführt, an dessen Ausgang eine Spannung entsteht, die als Information über die Resonanzfrequenz interpretiert werden kann. Sie ist nämlich einem spannungsgesteuerten Oszillator 97 zugeführt, dessen Frequenz f_{C} bis auf einen mittels eines Frequenzteilers 98 vorgebbaren konstanten Faktor der Frequenz des Erregersignals entspricht. Der Eingang eines Rechteck-Sinusumformers 99 liegt am Ausgang des Frequenzteilers 98. Der Phasenkomparator 93 läßt sich in einfacher Weise durch ein Exclusiv-ODER-Gatter realisieren.

Um nicht für die abwechselnd als Sender oder Empfänger betriebenen Ultraschallwandler je eine Phasenregelschleife vorsehen zu müssen, ist in der Phasenregelschleife 9 ein Schalter 95 vorgesehen, der kurz nach dem Erreichen des eingeregelten Zustandes geöffnet wird. Dabei wird die dem eingeregelten Zustand entsprechende Spannung auf einem Haltekondensator C_{H} während eines vollen Meßzyklus (Messung in Strömungs- und in Gegenströmungsrichtung) gespeichert. Vor einem neuen Meßzyklus kann erneut auf die richtige Resonanzfrequenz geregelt werden.

Mit dem Sensor 81 kann auch die richtige Funktion der zugehörigen Wandlerscheibe und die von deren Wandlern überwacht werden.

## Patentansprüche

1. Meßwertaufnehmer für ein Ultraschall-Volumendurchfluß-Meßgerät, der
- in eine die zu messende Flüssigkeit führende Rohrleitung einzusetzen ist und der
- aus einem geraden Meßrohr (1) mit freier Strömungsquerschnittsfläche und ununterbrochener Rohrwand besteht, auf dessen Umfangsfläche, in Strömungsrichtung aufeinanderfolgend voneinander beabstandet, formschlüssig befestigt sind:
-- Ein einlaßseitiger, erster Resonanzabsorber (11), bestehend aus mindestens einer Absorberscheibe (111),
-- eine erste Wandlerscheibe (21), auf deren einer Seitenfläche mindestens ein ihre Radialresonanzfrequenz erregender erster Ultraschallwandler (31) befestigt ist,
-- eine zweite Wandlerscheibe (22), auf deren einer Seitenfläche mindestens ein ihre Radialresonanzfrequenz erregender, zweiter Ultraschallwandler (32) befestigt ist, und
-- ein auslaßseitiger, zweiter Resonanzabsorber (12), bestehend aus mindestens einer Absorberscheibe (121),
- wobei die Absorberscheiben (111, 121) so dimensioniert sind, daß ihre jeweilige Radialresonanzfrequenz gleich der Ultraschallwandler-Erregerfrequenz ist.

2. Meßwertaufnehmer nach Anspruch 1 mit metallischem Meßrohr und metallischen Wandler- und Absorberscheiben.

3. Meßwertaufnehmer nach Anspruch 2 mit jeweils unterschiedlichen Metallen für das Meßrohr, für die Wandler- und/oder für die Absorberscheiben.

4. Meßwertaufnehmer nach Anspruch 2 mit Wandler- und Absorberscheiben aus demselben Metall mit möglichst niedrigem thermoelastischem Koeffizienten und mit einem korrosionsbeständigen Meßrohr.

5. Meßwertaufnehmer nach Anspruch 3 mit Wandlerscheiben, deren mechanische Resonanzgüte groß im Vergleich zu der der Absorberscheiben ist.

6. Meßwertaufnehmer nach Anspruch 1 mit verdickter Wand (2) des Meßrohrs (1) auf einem Teil seiner Länge zwischen den Wandlerscheiben (21, 22).

7. Meßwertaufnehmer nach Anspruch 6 mit mindestens einer Ringnut (3) in der verdickten Wand (2).

8. Meßwertaufnehmer nach Anspruch 7 mit von einem Dämpfungsmaterial (4) ausgefüllter Ringnut (3) und/oder mit davon bedeckter Mantelfläche der verdickten Wand (2).

9. Meßwertaufnehmer nach Anspruch 1 mit mindestens zwei Absorberscheiben (111, 112, 113), deren Zwischenraum mit einem Dämpfungsmaterial (4) ausgefüllt ist.

10. Meßwertaufnehmer nach Anspruch 9, bei dem die Mantelflächen der Absorberscheiben mit dem Dämpfungsmaterial (4) bedeckt sind.

11. Meßwertaufnehmer nach Anspruch 1 mit jeweils einer Entkoppelscheibe (71, 72) zwischen der jeweiligen Wandlerscheibe (21, 22) und der benachbarten Absorberscheibe (11, 12), wobei die Abmessungen und/oder die mechanischen Eigenschaften der Entkoppelscheibe von denen der Absorberscheibe abweichen.

12. Meßwertaufnehmer nach einem der Ansprüche 1 bis 11 mit einem Ultraschallsensor (81) auf einer der Wandlerscheiben (21, 22), der als Istwertgeber in eine elektronische Phasenregelschleife (9) zur auf die Resonanzfrequenz der Wandlerscheiben (21, 22) geregelten Erzeugung eines Erregersignals für die Ultraschallwandler (31, 32) einbezogen ist.

## Claims

1. Sensing element for an ultrasonic volumetric flowmeter which
- is to be installed in a pipeLine conducting the fluid to be measured and
- consists of a straight section of pipe (1) with an unrestricted cross-sectional area and an uninterrupted wall to the external surface of which are positively fixed, successively in the downstream direction and in a spaced-apart relationship:
-- a first resonance absorber (11) at the inlet end consisting of at least one absorber disk (111),
-- a first transducer disk (21) having a first ultrasonic transducer (31) attached to one lateral surface thereof which excites the radial resonance frequency of said first transducer disk,
-- a second transducer disk (22) having a second ultrasonic transducer (32) attached to one lateral surface thereof which excites the radial resonance frequency of said second transducer disk, and
-- a second resonance absorber (12) at the outlet end consisting of at least one absorber disk (121),
- the absorber disks (111, 121) being dimensioned so that their respective radial resonance frequencies are equal to the excitation frequencies of the associated ultrasonic transducers.

2. A sensing eLement as claimed in claim 1 wherein the section of pipe and the transducer and absorber disks are made of metal.

3. A sensing element as claimed in claim 2 wherein the section of pipe, the transducer disks, and/or the absorber disks are made of different metals.

4. A sensing element as claimed in claim 3 wherein the transducer and absorber disks are made of the same metal with as low a thermoelastic coefficient as possibLe, and wherein the section of pipe is resistant to corrosion.

5. A sensing element as claimed in claim 3 wherein the transducer disks have a mechanical Q which is Large compared to that of the absorber disks.

6. A sensing element as cLaimed in claim 1 wherein the wall (2) of the section of pipe (1) is thickened over part of its length between the transducer disks (21, 22).

7. A sensing element as claimed in claim 6 wherein the thickened wall (2) has at least one annular groove (3).

8. A sensing element as claimed in claim 7 wherein the annular groove (3) is filled with an absorbing material, which also covers the cylindrical surface of the thickened wall (2) if necessary.

9. A sensing element as claimed in claim 1 wherein at least two absorber disks (111, 112, 113) are provided, and wherein the spaces between said absorber disks are filled with an absorbing material (4) .

10. A sensing element as claimed in claim 9 wherein the lateral surfaces of the absorber disks are covered with the absorbing material (4).

11. A sensing element as claimed in claim 1 and comprising a decoupling disk (71, 72) between the respective transducer disk (21, 22) and the adjacent absorber disk (11, 12), with the dimensions and/or the mechanical properties of the decoupling disk differing from those of the absorber disk.

12. A sensing element as claimed in any one of claims 1 to 11 and comprising an ultrasonic sensor (81) on one of the transducer disks (21, 22) which is included as an actual-value transmitter in an electronic phase-locked loop (9) for generating an excitation signal for the ultrasonic transducers (31, 32) which is locked to the resonance frequency of the transducer disks (21, 22).

## Revendications

1. Capteur de mesure pour un débitmètre volumique à ultrasons, qui
- est à insérer dans une conduite tubulaire véhiculant le liquide à mesurer, et qui
- est constitué d'un tube de mesure (1) rectiligne à superficie de section d'écoulement libre, et à paroi de tube ininterrompue, sur la surface périphérique duquel sont fixés par complémentarité de forme, en se succédant dans la direction de l'écoulement et en étant espacés les uns des autres:
-- un premier absorbeur de résonance (11) situé côté entrée et constitué d'au moins un disque d'absorption (111),
-- un premier disque de transducteur (21) sur l'une des surfaces latérales duquel est fixé au moins un premier transducteur à ultrasons (31) produisant l'excitation de ce disque selon sa fréquence de résonance radiale,
-- un second disque de transducteur (22) sur l'une des surfaces latérales duquel est fixé au moins un second transducteur à ultrasons (32) produisant l'excitation de ce disque selon sa fréquence de résonance radiale, et
-- un second absorbeur de résonance (12) situé du côté sortie, qui est constitué d'au moins un disque d'absorption (121),
- les disques d'absorption (111, 121) étant dimensionnés de manière telle, que la fréquence de résonance radiale de chacun est égale à la fréquence d'excitation du transducteur à ultrasons.

2. Capteur de mesure selon la revendication 1, comportant un tube de mesure métallique et des disques de transducteur et d'absorption métalliques.

3. Capteur de mesure selon la revendication 2, comportant des métaux respectivement différents pour le tube de mesure, pour les disques de transducteurs et/ou pour les disques d'absorption.

4. Capteur de mesure selon la revendication 2, comportant des disques de transducteur et d'absorption réalisés dans le même métal à coefficient thermoélastique le plus bas possible, et comportant un tube de mesure résistant à la corrosion.

5. Capteur de mesure selon la revendication 3, comportant des disques de transducteur, dont la qualité mécanique de résonance est grande par rapport à celle des disques d'absorption.

6. Capteur de mesure selon la revendication 1, comportant un tube de mesure (1) à paroi d'une épaisseur augmentée, sur une partie de sa longueur entre les disques de transducteur (21, 22).

7. Capteur de mesure selon la revendication 6, comportant au moins une rainure annulaire (3) dans la paroi (2) d'épaisseur augmentée.

8. Capteur de mesure selon la revendication 7, comportant une rainure annulaire (3) remplie d'un matériau d'amortissement (4) et/ou présentant une surface périphérique de la paroi (2) d'épaisseur augmentée, recouverte de ce matériau d'amortissement.

9. Capteur de mesure selon la revendication 1, comportant au moins deux disques d'absorption (111, 112, 113) dont l'espace intermédiaire est rempli d'un matériau d'amortissement (4).

10. Capteur de mesure selon la revendication 9, dans lequel les surfaces périphériques des disques d'absorption sont revêtues par le matériau d'amortissement (4).

11. Capteur de mesure selon la revendication 1, comportant un disque de découplage (71, 72) entre à chaque fois un disque de transducteur (21, 22) et le disque d'absorption (11, 12) voisin, les dimensions et/ou les caractéristiques mécaniques du disque de découplage étant différentes de celles du disque d'absorption.

12. Capteur de mesure selon l'une des revendications 1 à 11, comportant un détecteur à ultrasons (81) sur l'un des disques de transducteur (21, 22), qui est inclus en tant que capteur de valeur instantanée, dans une boucle de régulation de phase électronique (9), destinée à la production d'un signal d'excitation pour les transducteurs à ultrasons (31, 32), la production étant régulée à la fréquence de résonance des disques de transducteur (21, 22).
